# EUROPÄISCHE PATENTANMELDUNG

(11) **EP 0 857 913 A2**
(43) Veröffentlichungstag der Anmeldung: **12.08.1998**
(21) Anmeldenummer: 98102167.8
(22) Anmeldetag: 07.02.1998
(51) Int. Cl.: F21M 3/12, F21V 8/00, B60Q 1/00

(54) **Beleuchtungsvorrichtung für Kraftfahrzeuge**

(30) Priorität: 11.02.1997 DE 19705146
(71) Anmelder: Hella KG Hueck & Co., 59552 Lippstadt (DE)
(72) Erfinder: Eichhorn, Karsten, Dr., 59320 Ennigerloh (DE); Kalze, Franz-Josef, 33428 Harsewinkel (DE)

(57) **Zusammenfassung**

Beleuchtungsvorrichtung für Kraftfahrzeuge mit einem das Licht führenden Lichtleiter (1), der über ein Austrittskoppelelement (2) mit einem das Licht abstrahlenden Linsenkörper (3) verbunden ist, wobei die Lichteintrittsfläche (9) des Koppelelements an der Lichtaustrittsfläche des Lichtleiters anliegt und diese vollflächig bedeckt und wobei die Lichteintrittsfläche (6) des Linsenkörpers (3) an der Lichtaustrittsfläche (7,13) des Austrittskoppelelements (2) anliegt und diese vollflächig bedeckt, wobei die Lichtaustrittsfläche (7,13) des Austrittskoppelelements eine gerade waagerechte Grundseite (14) umfaßt, von der aus sich mindestens eine weitere Seite (17) stetig in Richtung der Mittelsenkrechten der Grundseite (14) erstreckt.

## Beschreibung

Die Erfindung betrifft eine Beleuchtungsvorrichtung für Kraftfahrzeuge mit einem das Licht führenden Lichtleiter, der über ein Austrittskoppelelement mit einem das Licht abstrahlenden Linsenkörper verbunden ist, wobei die Lichteintrittsfläche des Koppelelements an der Lichtaustrittsfläche des Lichtleiters anliegt und diese vollflächig bedeckt und wobei die Lichteintrittsfläche des Linsenkörpers an der Lichtaustrittsfläche des Austrittskoppelelements anliegt und diese vollflächig bedeckt.

Aus der DE 195 26 312 A1 ist eine Beleuchtungsvorrichtung für Fahrzeuge bekannt bei der zwischen einem Lichtleiter und einem Linsenkörper ein Austrittskoppelelement angeordnet ist. Die Lichteintrittsfläche des Koppelelements bedeckt die Lichtaustrittsfläche des Lichtleiters. Weiterhin bedeckt die Lichteintrittsfläche des Linsenkörpers die Lichtaustrittsfläche des Koppelelements. Die Ausbildung der Lichtaustrittsfläche des Koppelelements erzeugt im Zusammenwirken mit einem entsprechend geformten Linsenkörper eine gewünschte Lichtverteilungsform als Abblendlicht bzw. Nebellicht. Zur Bildung einer solchen gewünschten Lichtverteilung ist die Lichtaustrittsfläche des Koppelelements im wesentlichen rechteckförmig ausgebildet.

Weiterhin ist aus der DE 41 39 266 A1 ein Kraftfahrzeugscheinwerfer bekannt, der unter anderem einen Linsenkörper aufweist, der in Abstand von einem Lichtleiter angeordnet ist. An die Lichtaustrittsseite des Lichtleiters ist ein Koppelelement angeformt, dessen Lichtaustrittsfläche zum einen durch ein rechteckförmiges Segment und zum anderen durch ein dreieckförmiges Segment gebildet wird.

Nachteilig an den bekannten Beleuchtungsvorrichtungen ist, daß keine gleichmäßige Ausleuchtung in dem Fernbereich gewährleistet werden kann.

Aufgabe der vorliegenden Erfindung ist es, eine Beleuchtungsvorrichtung für Kraftfahrzeuge anzugeben, die eine homogene Lichtverteilung gewährleistet, wobei das Maximum der Lichtstärkeverteilung unmittelbar im Bereich der Hell-/Dunkelgrenze angeordnet ist.

Die Aufgabe wird erfindungsgemäß dadurch gelöst, daß die Lichtaustrittsfläche des Austrittskoppelelements eine gerade waagerechte Grundseite umfaßt, von der aus sich mindestens eine weitere Seite stetig in Richtung der Mittelsenkrechten der Grundseite erstreckt.

Der Vorteil der Erfindung besteht insbesondere darin, daß zum einen durch den geraden waagerechten Verlauf einer Grundseite der Lichtaustrittsfläche des Koppelelements die Hell-/Dunkelgrenze der Beleuchtungsvorrichtung vorgegeben werden kann und zum anderen durch einer an einem Ende der Grundseite sich anschließenden Seite im Zusammenwirken mit einem nachgeschalteten Linsenkörper ein stetig abfallender Verlauf einer Lichtstärkeverteilung erzielbar ist. Das Maximum der Lichtstärkeverteilung ist unmittelbar im Bereich der Hell-/Dunkelgrenze angeordnet, wobei sich die Lichtstärke in Richtung des Nahbereichs verringert, so daß der Lichtstärkegradient von der Hell-/Dunkelgrenze einen durchgehend negativen Wert aufweist. Auf diese Weise wird eine in vertikaler Richtung homogene Lichtverteilung erzeugt, wobei eine scharfe Hell-/Dunkelgrenze gebildet wird.

Nach einer Ausgestaltung der Erfindung erstrecken sich die zwei von den Enden der Grundseite verlaufenden Seiten bogenförmig und symmetrisch bezüglich der Mittelsenkrechten der Grundseite, bis sie auf der Mittelsenkrechten in einem unteren Bereich zusammenlaufen. Sowohl der Mittelsenkrechten der Grundseite als auch einer gedachten verlängerten Linie der Grundseite nähern sich diese bogenförmigen Seiten asymptotisch. Die Lichtaustrittsfläche des Koppelelements hat dort vorzugsweise eine fischschwanzförmige Ausbildung. Durch den symmetrischen Verlauf der bogenförmigen Seiten ergibt sich eine bezüglich einer vertikalen Ebene symmetrische Lichtstärkeverteilung.

Ein bevorzugtes Ausführungsbeispiel der Erfindung wird nachfolgend anhand der Zeichnungen näher erläutert.

Es zeigen
- Fig. 1:: eine perspektivische Darstellung einer Beleuchtungsvorrichtung mit einem für Nebellicht vorgesehenen Linsenkörper,
- Fig. 2:: eine Lichtaustrittsfläche eines Koppelelements nach dem Stand der Technik sowie eine Lichtstärkeverteilung in Verbindung mit einem Linsenkörper gemäß der Erfindung und
- Fig. 3: eine Lichtaustrittsfläche eines Koppelelements nach der Erfindung und eine Lichtstärkeverteilung in Verbindung mit einem sich unmittelbar anschließenden Linsenkörper.

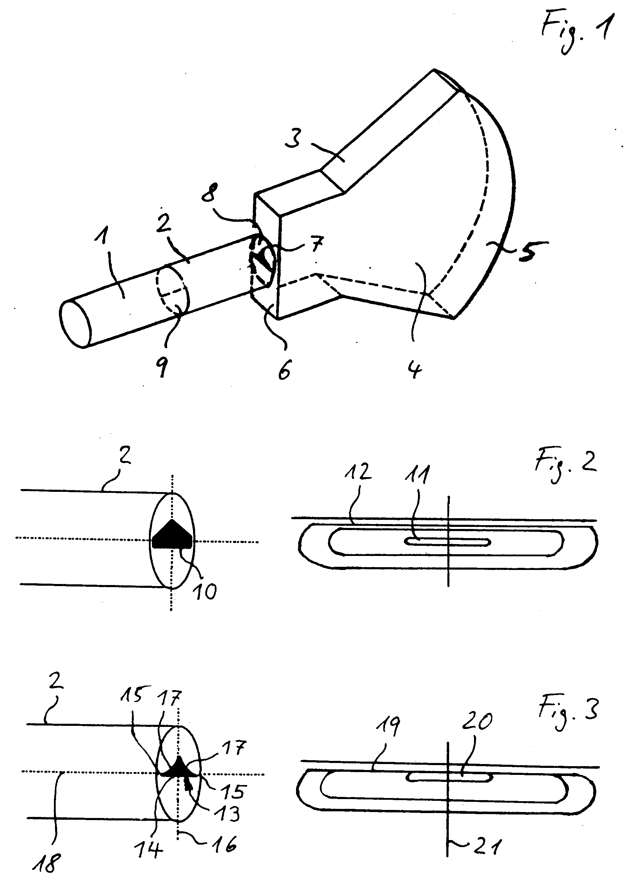

Die in Fig. 1 gezeigte Beleuchtungsvorrichtung weist einen Lichtleiter 1 auf, der mit einer nicht dargestellten Lichtquelle verbunden ist und das Licht über ein Austrittskoppelelement 2 an einen Linsenkörper 3 leitet, der das Licht entsprechend einer vorgegebenen Lichtstärkeverteilung abstrahlt. Nach dem im folgenden beschriebenen Ausführungsbeispiel besteht der Linsenkörper aus einem kartesischen Oval, das ausschließlich als Nebelscheinwerfer ausgebildet ist. Zu diesem Zweck weist der Linsenkörper 3 zwei in einem Abstand zueinander angeordnete parallele Seitenflächen 4 auf, die vorderseitig einen kreisbogenförmigen Kantenverlauf aufweisen. Die sich an diese Kanten anschließende Lichtaustrittsfläche 5 des Linsenkörpers 3 ist bezüglich einer vertikalen Ebene konvexförmig ausgebildet, so daß das Lichtbündel in vertikaler Richtung fokussiert wird. In horizontaler Richtung bewirken die planen Seitenflächen 4 einen großen Austrittswinkel, so daß sich eine äußerst flache Lichtverteilung entsprechend dem Nebellicht ergibt. Die rückseitig des Linsenkörpers 3 angeordnete Lichteintrittsfläche 6 ist im wesentlichen rechteckförmig ausgebildet und überdeckt eine Lichtaustrittsfläche 7 des Koppelelements 2. Die Lichtaustrittsfläche 7 ist Bestandteil eines kreisförmigen Endes 8 des Koppelelements 2. Das Koppelelement 2 ist zylinderförmig ausgebildet, wobei eine Lichteintrittsfläche 9 desselben zu einer Lichtaustrittsfläche des Lichtleiters 1 korrespondiert. Die Form des Koppelelements 2 ist daher dem Lichtleiter 1 angepaßt. Alternativ kann das Koppelelement 2 und der Lichtleiter 1 auch einstückig ausgebildet sein. Sowohl der Lichtleiter 1 sowie das Koppelelement 2 als auch der Linsenkörper 3 bestehen aus einem transparenten Werkstoff.

Fig. 2 zeigt eine Lichtstärkeverteilung einer Beleuchtungsvorrichtung gemäß Fig. 1, wobei eine bekannte Lichtaustrittsfläche 10 aus einem rechteckförmigen Austrittssegment und einem dreieckförmigen, mit einer Spitze nach oben weisenden Austrittssegment besteht. Hierbei ergibt sich eine Lichtstärkeverteilung, bei der ein Lichtstärkemaximum 11 weit unterhalb einer Hell-/Dunkelgrenze 12 angeordnet ist. Das bedeutet, daß der Lichtstärkegradient von der Hell-/Dunkelgrenze bis zum Maximum der Lichtstärkeverteilung in einem positiven Bereich verläuft, und in einem sich daran anschließenden weiteren in Richtung eines Nahbereichs verlaufenden Bereichs negative Werte annimmt.

Eine in Fig. 3 dargestellte erfindungsgemäße Lichtaustrittsfläche 13 des Koppelelements 2 weist eine waagerechte Grundseite 14 und zwei symmetrisch von jeweils den Enden 15 der Grundseite 14 sich symmetrisch zu einer Mittelline 16 der Grundseite 14 verlaufende bogenförmige Seite 17 auf. Diese bogenförmigen Seiten nähern sich sowohl der Mittelline 16 als auch einer gedachten verlängerten Linie 18 der Grundseite 14 asymptotisch. Die Form dieser Lichtaustrittsfläche 13 ermöglicht ein unmittelbar an der Hell-/Dunkelgrenze 19 sich anschließendes Lichtstärkemaximum 20. Im Zusammenwirken mit dem Linsenkörper 3 ermöglicht die Form der Lichtaustrittsfläche 13 ausgehend von dem Maximum 20 eine homogene Lichtstärkeverteilung, wobei der Lichtstärkegradient ausschließlich einen negativen Wert annimmt. Die symmetrische Anordnung der bogenförmigen Seiten 17 bewirken eine bezüglich einer vertikalen Ebene 21 symmetrische Lichtstärkeverteilung.

Nach dem bevorzugten Ausführungsbeispiel in Fig. 3 ist das Koppelelement 2 zwar derart an den Linsenkörper 3 angeformt, daß die optische Achse des Linsenkörpers 3 die Grundseite 14 der Lichtaustrittsfläche 7 schneidet. Alternativ kann vorgesehen sein, daß sich die Lage der Lichtaustrittsfläche 7 bezüglich der optischen Achse in vertikaler Richtung verschoben eingestellt wird. Diese Verstellung in vertikaler Richtung kann vorteilhaft dann vorgenommen werden, wenn eine weiche Hell-/Dunkelgrenze erzeugt werden soll.

Durch vertikale Verschiebung des Koppelelementes 2 gegenüber dem Linsenkörper 3 wird eine dynamische Verstellung der Hell-/Dunkelgrenze 12, 19 erreicht.

Alternativ kann das Koppelelement 2 auch mit einem anders geformten Linsenkörper verbunden sein, insbesondere durch Klebung. Zur Ausbildung eines Abblendlichtes kann der Linsenkörper auch omnidirektional ausgestaltet sein oder eine Kombination beider Linsenkörperformen bilden.

## Patentansprüche

1. Beleuchtungsvorrichtung für Kraftfahrzeuge mit einem das Licht führenden Lichtleiter, der über ein Austrittskoppelelement mit einem das Licht abstrahlenden Linsenkörper verbunden ist, wobei die Lichteintrittsfläche des Koppelelements an der Lichtaustrittsfläche des Lichtleiters anliegt und diese vollflächig bedeckt und wobei die Lichteintrittsfläche des Linsenkörpers an der Lichtaustrittsfläche des Austrittskoppelelements anliegt und diese vollflächig bedeckt, dadurch gekennzeichnet, daß die Lichtaustrittsfläche (7) des Austrittskoppelelements (2) eine gerade waagerechte Grundseite (14) umfaßt, von der aus sich mindestens eine weitere Seite (17) stetig in Richtung der Mittelsenkrechten (16) der Grundseite (14) erstreckt.

2. Beleuchtungsvorrichtung nach Anspruch 1, dadurch gekennzeichnet, daß die Lichtaustrittsfläche (7) des Austrittskoppelelements (2) aus einer geraden Grundseite (14) mit zwei Enden (15) besteht, von denen sich jeweils eine Seite (17) bogenförmig in Richtung der Mittelsenkrechten (16) erstreckt und in der Mittelsenkrechten (16) zusammenläuft.

3. Beleuchtungsvorrichtung nach Anspruch 1 oder 2, dadurch gekennzeichnet, daß die Lichtaustrittsfläche (7) fischschwanzförmig ausgebildet ist, wobei sich die bogenförmigen Seiten (7) mit großer Steigung in Richtung der Mittelsenkrechten (16) erstrecken und sich in einem Endbereich asymptotisch der Mittelsenkrechten (16) nähern.

4. Beleuchtungsvorrichtung nach einem der Ansprüche 1 bis 3, dadurch gekennzeichnet, daß die Lichteintrittsflächen (6) des Linsenkörpers (3) in vertikaler Richtung so weit die Lichtaustrittsfläche (7) des Austrittskoppelelements (2) überdeckt, daß eine Justierung des Austrittskoppelelements (2) in vertikaler Richtung vornehmbar ist, wobei die Grundseite (14) mit der optischen Achse einen gemeinsamen Schnittpunkt einerseits oder einen vertikalen Abstand zu der optischen Achse andererseits bilden kann.

5. Beleuchtungsvorrichtung nach einem der Ansprüche 1 bis 4, dadurch gekennzeichnet, daß sich die Grundseite (14) der Lichtaustrittsfläche (7) senkrecht zu der optischen Achse des Linsenkörpers (3) erstreckt.

6. Beleuchtungsvorrichtung nach einem der Ansprüche 1 bis 5, dadurch gekennzeichnet, daß der Linsenkörper (3) als kartesisches Oval ausgebildet ist, wobei sich die Lichtaustrittsfläche (5) des Ovals bogenförmig in vertikaler und/oder horizontaler Richtung erstreckt.

7. Beleuchtungsvorrichtung nach einem der Ansprüche 1 bis 6, dadurch gekennzeichnet, daß eine dynamische Verstellung der Hell-/Dunkelgrenze (12, 19) durch Verschiebung des Austrittskoppelelement (2) zum Linsenkörper (3) in vertikaler Richtung bewirkt wird.
